# FASCICULE DE BREVET EUROPEEN

(11) **EP 0 422 989 B1**
(45) Date de publication et mention de la délivrance du brevet: **13.12.1995**
(21) Numéro de dépôt: 90402735.6
(22) Date de dépôt: 03.10.1990
(51) Int. Cl.: G11B 23/03

(54) **Cassette de protection pour disque**
Plattenschutzkassette
Cassette for protecting disc

(30) Priorité: 10.10.1989 FR 8913191
(43) Date de publication de la demande: 17.04.1991
(73) Titulaire: ART TECH GIGADISC ATG, 31047 Toulouse (FR)
(72) Inventeur: Rousseau, Jean-Pierre, F-92045 Paris la Défense (FR)
(74) Mandataire: Ruellan-Lemonnier, Brigitte

(56) Documents cités:
- EP-A- 0 174 651
- EP-A- 0 202 660
- PATENT ABSTRACTS OF JAPAN vol. 11, no. 389 (P-648)(2836) 19 décembre 1987, & JP-A-62 154389 (TOSHIBA CORP.) 9 juillet 1987,
- IBM TECHNICAL DISCLOSURE BULLETIN vol. 26, no. 9, février 1984, ARMONK,USA pages 4656-4657; L. ROSE & AL.: "ULTRASONICALLY WELDED DISKETTE CARTRIDGE"

## Description

La présente invention concerne une cassette de protection pour disque, notamment pour disque optique numérique.

Actuellement certains types de disques, notamment certains types de disques optiques numériques appelés à être manipulés fréquemment, sont enfermés dans une cassette de forme sensiblement parallélépipèdique destinée à assurer une protection supplémentaire.

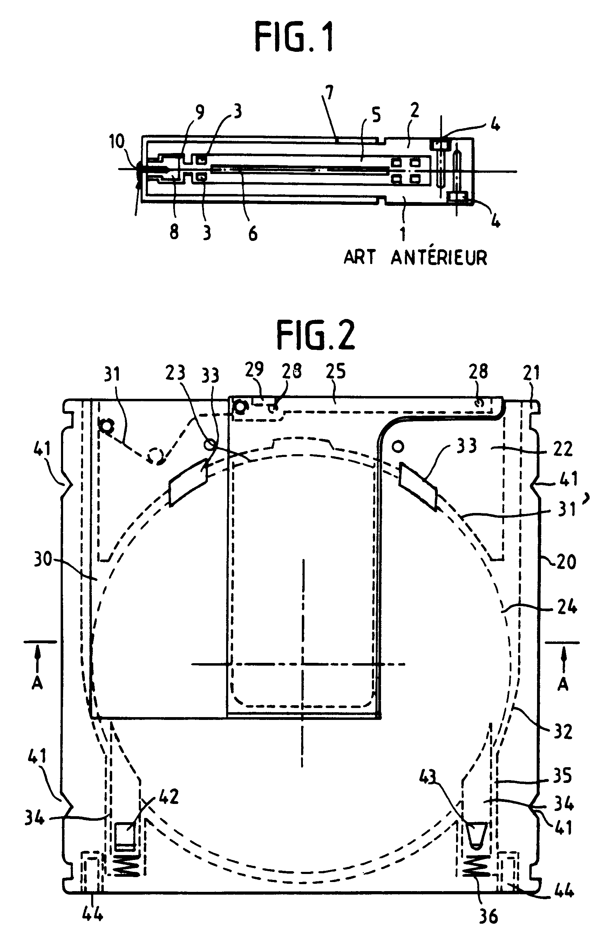

Comme représenté sur la figure 1, les cassettes de type connu sont constituées de deux flasques 1 et 2, obtenus par moulage d'une matière plastique. Les deux flasques sont assemblés l'un avec l'autre par l'intermédiaire de vis 4, de manière à former une chambre intérieure 5 contenant, outre le disque 6 à protéger, un certain nombre d'éléments mécaniques. De manière connue, chaque flasque comporte une fenêtre par laquelle les dispositifs d'écriture et de lecture accèdent aux informations enregistrées sur le disque. Un volet 7 constitué dans le mode de réalisation représenté, par une pièce en forme de U recouvre chacune des deux fenêtres d'accès au disque. Ce volet 7 est fixé, par l'intermédiaire d'une vis 10, sur un moyen de guidage 8 monté de manière à pouvoir coulisser dans une glissière 9 réalisée dans les deux flasques 1 et 2. Dans le cas de la cassette décrite ci-dessus, lors de l'assemblage, le premier flasque 1 reçoit les éléments mécaniques 3 nécessaires au fonctionnement puis le disque 6 est placé sur l'ensemble. Le second flasque 2 lui-même équipé d'éléments mécaniques doit subir un retournement pour venir recouvrir le disque et le premier flasque. Des cassettes de ce type sont décrites aussi dans les brevets EP-A-0174651 et EP-A-0202660.

Ce type de cassette présente un certain nombre d'inconvénients. Elle est tout d'abord délicate à assembler. D'autre part, le démontage pour le nettoyage du disque et/ou le remplacement d'une cassette entraîne un certain nombre de contraintes. Ainsi, le démontage est réalisé selon l'ordre suivant; il est nécessaire de désassembler le volet double 7 de son moyen de guidage 8, de faire glisser le volet 7 hors de la cassette, puis de désassembler les deux flasques 1 et 2 de la cassette en dévissant les vis 4, et ensuite de retirer le flasque supérieur 2 avant de sortir le disque 6 hors du flasque inférieur 1. Ces opérations doivent être réalisées avec précautions. En effet, le dévissage des vis 4 peut créer des poussières supplémentaires dues aux copeaux de matière plastique se formant lors de la manipulation des vis. D'autre part, lorsque l'on retire le flasque supérieur, il y a des risques de chute des éléments mécaniques 3 équipant l'intérieur du flasque 1 sur le disque. De plus, une cassette constituée de deux flasques démontables est moins rigide et présente une épaisseur et une planéité moins précise qu'une cassette constituée par une pièce unique. Pour remédier aux inconvénients ci-dessus, on a aussi proposé dans le patent abstract of Japan Vol.11, n°389 P-648-2836 une cassette en forme de fourreau fermé par un embout .

La présente invention a donc pour but de proposer une nouvelle cassette de protection pour disque de type fourreau qui permette de garder le disque lors de la lecture.

En conséquence, la présente invention a pour objet une cassette de protection pour disque de forme sensiblement parallélépipèdique, constituée par un fourreau présentant une ouverture latérale permettant au disque d'être extrait du fourreau et dans laquelle vient s'emboîter un embout, obturant l'ouverture, caractérisé en ce que ledit fourreau comporte, sur au moins une de ses faces supérieure ou inférieure, une fenêtre fermée par un volet mobile permettant la lecture du disque, ledit volet étant fixé de manière coulissante sur l'embout.

Selon un mode de réalisation préférentiel, le fourreau est constitué de deux demi-fourreaux identiques assemblées l'un à l'autre. L'assemblage des fourreaux peut être réalisé par soudure aux ultrasons, par collage ou similaire.

La cassette conforme à la présente invention présente donc un certain nombre d'avantages. Elle est de conception totalement symétrique, les deux demi-fourreaux étant réalisés dans un même moule. L'embout permet de rigidifier l'ensemble. Cette conception permet d'obtenir une cassette économique, rigide et présentant des côtes précises.

Selon une autre caractéristique de la présente invention, chaque volet est constitué par une plaque fixée sur un moyen de guidage coulissant dans une glissière réalisée dans l'embout. Le moyen de guidage et le volet peuvent constituer une pièce unique réalisée alors, de préférence, en matière plastique. De préférence, pour éviter les frottements lors de l'ouverture et de la fermeture du volet, le moyen de guidage comporte au moins un moyen de roulement, tel qu'un petit rouleau.

Selon une autre caractéristique de la présente invention, l'embout qui rigidifie l'ensemble de la cassette est constitué par une pièce présentant sur un côté une découpe de forme semi-circulaire et comportant sur le côté opposé deux glissières superposées pour recevoir les moyens de guidage de chaque volet.

Selon une caractéristique supplémentaire de la présente invention, la cassette comporte à l'intérieur du fourreau des moyens de blocage du disque en position. Ces moyens de blocage sont utilisés pour maintenir le disque en position, notamment lors du transport ou lors de l'insertion du disque dans un lecteur-enregistreur.

Selon un mode de réalisation préférentiel, les moyens de blocage sont constitués par au moins un patin fixe et un patin mobile coopérant l'un avec l'autre selon sensiblement une diagonale du disque. De préférence, le ou les patins fixes sont solidaires de l'embout et peuvent même être partie intégrante de l'embout, tandis que le ou les patins mobiles sont fixés dans un logement prévu à l'intérieur du fourreau, sur le côté opposé à l'ouverture par l'intermédiaire d'un moyen élastique. Dans ce cas, les patins mobiles sont prisonniers du fourreau tandis que les patins fixes sont solidaires de l'embout. En conséquence, lors du démontage, le disque ne risque pas d'être endommagé par la chute des patins.

D'autres caractéristiques et avantages de la présente invention apparaîtront à la lecture de la description faite ci-après d'un mode de réalisation préférentiel d'une cassette de protection pour disque avec référence aux dessins ci-annexés dans lesquels :
- la figure 1 déjà décrite représente une vue en élévation latérale schématique d'une cassette de protection pour disque selon l'art antérieur ;
- la figure 2 est une vue en plan de dessus d'une cassette de protection pour disque conforme à la présente invention dans laquelle les éléments internes ont été représentés en pointillé ;
- la figure 3 est une vue en élévation latérale de la cassette de figure 2, côté fixation du volet ;
- la figure 4 est une vue en coupe par AA de la figure 2 représentant simplement l'intérieur du fourreau ;
- la figure 5 est une vue en coupe schématique d'un patin mobile, et
- la figure 6 est une vue en coupe schématique montrant la fixation d'un volet mobile.

Pour simplifier la description, dans les figures les mêmes éléments portent les mêmes références.

Comme représenté sur les figures 2 à 6, la cassette de protection pour disque conforme à la présente invention a sensiblement la forme d'un parallélépipède plat. Elle est constituée principalement d'un fourreau 20. Ce fourreau 20 est composé de deux demi-fourreaux identiques 20′, 20˝. De préférence, les deux demi-fourreaux identiques 20′ et 20˝ sont réalisés par moulage d'une matière plastique, notamment de polycarbonate additionné ou non de charges. Ils sont assemblés par soudure, par exemple par soudure aux ultra-sons, ou par collage pour former une pièce unique présentant une ouverture latérale 21. Dans cette ouverture latérale 21 vient s'emboîter un embout 22, qui sera décrit de manière plus détaillée ci-après. D'autre part, les faces supérieure et inférieure du fourreau 20 présentent chacune une fenêtre 23. Cette fenêtre permet d'accéder aux informations contenues sur le disque 24. La fenêtre supérieure et la fenêtre inférieure sont chacune fermées par un volet 25.

Comme représenté plus particulièrement sur les figures 2, 3 et 6, le volet 25 est constitué par une plaque plane présentant sensiblement la forme d'un L. La plaque 25 se prolonge par une patte 25′ qui est repliée en forme de C et qui vient se souder ou se riveter sur un moyen de guidage 26. Le moyen de guidage 26 est monté dans une glissière 27 réalisée à l'intérieur de l'embout 22. De ce fait, le volet 25 peut coulisser parallèlement à l'embout dans un évidemment 30 réalisé dans les faces supérieure ou inférieure du fourreau 20. D'autre part, la patte 25′ présente une encoche 29 qui permet à un doigt extérieur, à savoir à un doigt prévu dans le lecteur-enregistreur, de faire coulisser le volet. De plus, un ressort de rappel 31 fixé en appui entre l'embout raidisseur 22 et le moyen de guidage 26 ramène le volet en position de fermeture lorsque la cassette est extraite de l'enregistreur-lecteur.

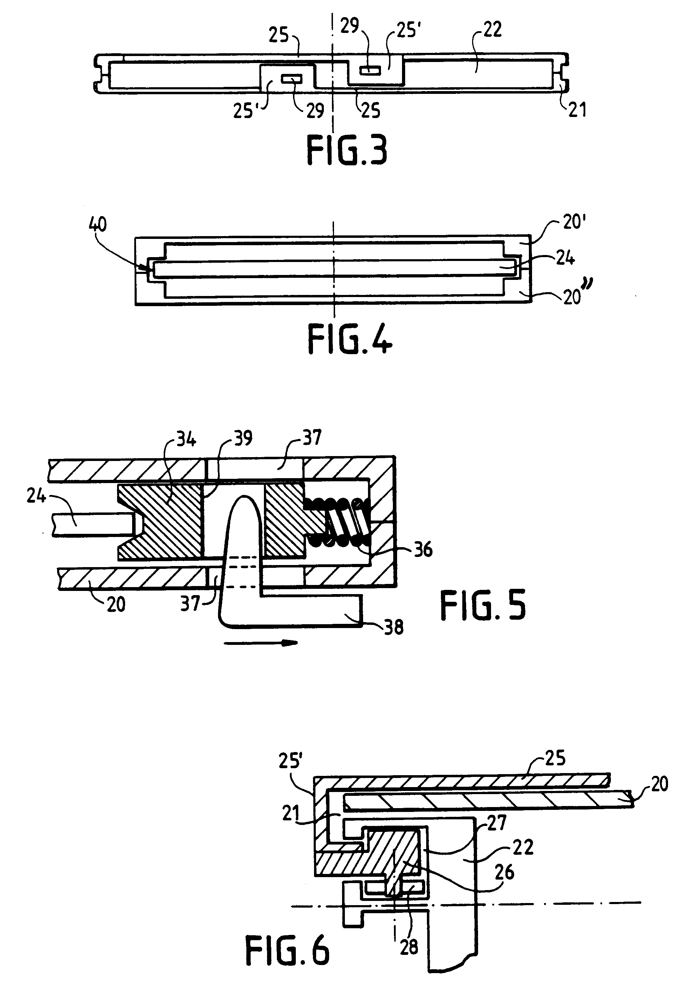

De plus, comme représenté sur la figure 6, pour limiter les frottements pendant le déplacement du volet, le moyen de guidage 26 est équipé de rouleaux 28. De préférence, comme décrit ci-dessus, la cassette est équipée de deux volets indépendants comportant chacun leur moyen de guidage respectif monté dans une glissière indépendante. Ceci permet de n'ouvrir qu'un seul volet pour n'avoir accès qu'à la face du disque qui doit être lue ou enregistrée, ce qui évite aux poussières de rentrer à l'intérieur de la cassette.

Comme représenté sur la figure 2, l'embout raidisseur est constitué par une pièce massive comportant sur son côté opposé aux glissières 27 supérieure et inférieure, une découpe de forme semi-circulaire 31′. Cette découpe de forme semi-circulaire 31′ coopère avec une découpe de forme semi-circulaire 32 prévue dans la partie intérieure du fourreau opposée à l'ouverture. Ces deux découpes semi-circulaires forment à l'intérieur un volume cylindrique plat destiné à loger le disque 24 et les éléments mécaniques de fonctionnement de type connu.

Conformément à la présente invention, pour bloquer le disque en position, notamment pendant le transport, des moyens de blocage constitués par des patins fixes 33 et des patins mobiles 34 sont prévus à l'intérieur de la cassette. De manière plus spécifique, deux patins fixes 33 sont fixés sur l'embout comme représenté sur la figure 2, tandis que les patins mobiles sont fixés à l'intérieur du fourreau dans un logement 35 prévu dans la partie semi-circulaire 32, sur le côté opposé à l'ouverture 11. Comme représenté de manière plus détaillée sur la figure 5, chaque patin mobile 34 est fixé à l'intérieur de son logement 35 réalisé dans le fourreau 20 par l'intermédiaire d'un ressort de rappel 36. Le fourreau 20 présente au niveau des patins mobiles une ouverture 37 permettant à un doigt extérieur 38 de débloquer le patin mobile 34 par insertion dans une encoche 39 réalisée dans ledit patin. Le disque peut donc être libéré par une faible course imposée de l'extérieur au patin mobile 34. D'autre part, comme représenté sur les figures 2 et 4, la partie intérieure du fourreau présentant une forme semi-circulaire 32 se prolonge de chaque côté par une rainure 40 de guidage du disque.

De manière connue, la cassette comporte des moyens de centrage latéral 41 constitués par quatre encoches en V formant un angle de 120°. Ces encoches 41 permettent le centrage latéral de la cassette par des dispositifs extérieurs. L'angle de 120° a été choisi de préférence à l'angle de 90° utilisé dans les cassettes de type connu, car il facilite un passage rapide devant le dispositif extérieur. De plus, la cassette comporte des dispositifs de centrage constitués par une encoche de forme carrée 42 et une encoche de forme triangulaire 43. Ces deux encoches de forme différente améliorent la précision du centrage.

D'autre part, comme représenté sur la figure 2, la cassette conforme à la présente invention comporte de manière connue des moyens de codage 44 destinés à protéger le disque contre toute tentative d'écriture erronée. Dans la cassette de la présente invention, les moyens de codage de la cassette sont introduits et clipsés dans le fourreau depuis l'extérieur du fourreau et n'ont aucun accès à la chambre interne destinée à recevoir le disque.

La cassette de protection pour disque décrite ci-dessus présente de nombreux avantages. Ainsi, la réalisation du fourreau à partir de deux demi-fourreaux identiques permet de les mouler sur un outillage unique, ce qui diminue le prix de réalisation de la cassette. D'autre part, le fourreau tel que réalisé présente une rigidité et une précision de côtes supérieures à celles des cassettes de l'art antérieur. Ainsi, la précision sur l'épaisseur peut être obtenue en réalisant la soudure du fourreau entre deux outils venant en butée, laissant entre eux l'épaisseur souhaitée pour la cassette, l'épaisseur dépendant d'une seule côte d'outillage et non de la somme de deux côtes de pièces.

L'utilisation de deux volets séparés permet de limiter l'introduction de poussière à l'intérieur de la cassette. D'autre part, même en cas d'encrassement du disque, celui-ci peut être facilement nettoyé car il peut être facilement extrait de la cassette sans endommagement. En effet, le principe de construction de la cassette permet d'éviter la chute d'objet et d'outil sur le disque lors de son extraction hors de la cassette. Ainsi, lorsque l'embout raidisseur est démonté hors du fourreau, le disque reste guidé dans le fourreau par des butées prenant appui en périphérie du disque sur la couronne extérieure à la zone de gravure du disque. De plus, les rainures 40 sur les côtés intérieurs du fourreau guident le disque pendant sa sortie pour éviter tout contact des faces du disque avec le fourreau et éviter ainsi les rayures. Les patins mobiles de blocage du disque et leurs ressorts restent prisonniers dans leurs logements 35. En effet, la course des ressorts 36 est plus courte que la course nécessaire pour sortir les patins mobiles 34 de leur position clipsée. Ils ne peuvent donc sortir seuls de leur logement. D'autre part, le fourreau ne comporte à l'intérieur aucune autre pièce mobile, il n'y a donc pas de risque de chute de pièces sur le disque. En effet, les moyens de codage n'ont pas d'accès au logement du disque.

## Revendications

1. Une cassette de protection pour disque de forme sensiblement parallélépipèdique constituée par un fourreau (20) présentant une ouverture latérale (21) permettant au disque d'être extrait du fourreau et dans laquelle vient s'emboîter un embout (22) obturant l'ouverture, caractérisée en ce que ledit fourreau comporte sur au moins une de ses faces supérieure ou inférieure une fenêtre (23) fermée par un volet mobile permettant la lecture du disque, ledit volet étant fixé de manière coulissante sur l'embout.

2. Une cassette selon la revendication 1, caractérisée en ce que le fourreau est constitué de deux demi-fourreaux (20,20′) identiques assemblés l'un à l'autre.

3. Une cassette selon l'une quelconque des revendications 1 et 2, caractérisée en ce que chaque volet (25) est constitué par une plaque fixée sur un moyen de guidage (26) coulissant dans une glissière (27) réalisée dans l'embout (22).

4. Une cassette suivant la revendication 3, caractérisée en ce que chaque volet et son moyen de guidage forment une seule pièce.

5. Une cassette selon la revendication 3, caractérisée en ce que le moyen de guidage comporte au moins un moyen de roulement (28).

6. Une cassette selon l'une quelconque des revendications 1 à 5, caractérisée en ce que l'embout est constitué par une pièce présentant sur un côté une découpe de forme semi-circulaire (31) et comportant sur le côté opposé deux glissières (27) superposées pour recevoir les moyens de guidage de chaque volet.

7. Une cassette selon l'une quelconque des revendications 1 à 6, caractérisée en ce que la partie intérieure du fourreau opposée à l'ouverture présente une forme semi-circulaire (32) se prolongeant de chaque côté par une rainure (40) de guidage.

## Patentansprüche

1. Plattenschutzkassette in im wesentlichen prallelepipedischer Form, die aus einer Hülse (20) besteht, welche eine seitliche Öffnung (21) aufweist, damit die Platte aus der Hülse herausgezogen werden kann, und in die ein die Öffnung verschließendes Endstück (22) eingreift, dadurch gekennzeichnet, daß die Hülse auf ihrer oberen und/oder unteren Fläche ein von einem beweglichen Verschluß geschlossenes Fenster (23) aufweist, das das Lesen der Platte gestattet, wobei der Verschluß gleitend an dem Endstück befestigt ist.

2. Kassette nach Anspruch 1, dadurch gekennzeichnet, daß die Hülse aus zwei identischen Halbhülsen (20, 20′) besteht, die zusammengefügt sind.

3. Kassette nach Anspruch 1 oder 2, dadurch gekennzeichnet, daß jeder Verschluß (25) aus einer an einem Führungsmittel (26), das in einer im Endstück (22) ausgebildeten Gleitschiene (27) gleitet, befestigten Tafel besteht.

4. Kassette nach Anspruch 3, dadurch gekennzeichnet, daß jeder Verschluß Führungsmittel und sein aus einem Stück bestehen.

5. Kassette nach Anspruch 3, dadurch gekennzeichnet, daß das Führungsmittel mindestens ein Rollmittel (28) enthält.

6. Kassette nach einem der Ansprüche 1 bis 5, dadurch gekennzeichnet, daß das Endstück aus einem Teil besteht, das auf einer Seite eine halbrunde Ausnehmung (31) aufweist und auf der gegenüberliegenden Seite zwei übereinanderliegende Gleitschienen (27) zur Aufnahme der Führungsmittel jedes Verschlusses enthält.

7. Kassette nach einem der Ansprüche 1 bis 6, dadurch gekennzeichnet, daß der der Öffnung gegenüberliegende innere Abschnitt der Hülse eine halbrunde Form (32) aufweist und auf jeder Seite von einer Führungsnut (40) verlängert wird.

## Claims

1. A disk-protection cartridge with a substantially parallelepiped shape, constituted by a sheath (20) having a lateral aperture (21) allowing the disk to be removed from the sheath, and into which there is fitted an end piece (22), closing the aperture, characterized in that the said sheath includes, on at least one of its upper or lower faces, a window (23) closed by a movable shutter, allowing the disk to be read, the said shutter being fixed to the end piece in a sliding manner.

2. A cartridge according to Claim 1, characterized in that the sheath is formed by two identical half-sheaths (20, 20′) joined to each other.

3. A cartridge according to either of Claims 1 and 2, characterized in that each shutter (25) is formed by a plate fixed to a guiding means (26) that slides in a slideway (27) made in the end piece (22).

4. A cartridge according to Claim 3, characterized in that each shutter and its guiding means form a single piece.

5. A cartridge according to Claim 3, characterized in that the guiding means includes at least one rolling bearing means (28).

6. A cartridge according to any one of Claims 1 to 5, characterized in that the end piece is formed by a part having, on one side, a semi-circular cut-out portion (31) and having, on the opposite side, two superimposed slideways (27) to receive the means for guiding each shutter.

7. A cartridge according to any one of Claims 1 to 6, characterized in that the internal part of the sheath opposite the aperture has a semi-circular shape (32) that is extended, on each side, by a guiding groove (40).
